Europäisches Patentamt

European Patent Office

Office européen des brevets

(11) Publication number: **0 446 477 A1**

# EUROPEAN PATENT APPLICATION

(21) Application number: 90125260.1

(51) Int. Cl.⁵: **C03C 8/02**, C03C 8/08

(22) Date of filing: 21.12.90

(30) Priority: 08.03.90 US 490215

(43) Date of publication of application:
18.09.91 Bulletin 91/38

(84) Designated Contracting States:
DE ES FR GB NL

(71) Applicant: **MOBAY CORPORATION**
**Mobay Road**
**Pittsburgh Pennsylvania 15205(US)**

(72) Inventor: **Labant, Cynthia J.**
**9 St. Timothys Lane**
**Baltimore, MD 21228(US)**
Inventor: **Kuchinski, Frank A.**
**18 Blue Court**
**East Brunswick, NJ 08816(US)**
Inventor: **Sproson, Derek W.**
**1416 Chapel Hill Drive**
**Baltimore, MD 21237(US)**
Inventor: **Saad, Elie E.**
**15101 Cedartree Dr.**
**Burtonsville, MD 20866(US)**
Inventor: **Hyde, Robert L.**
**Fife Highpasture Court**
**Owings Mills, MD 21117(US)**

(74) Representative: **Müller, Gerhard, Dr. et al**
**BAYER AG Konzernverwaltung RP**
**Patentabteilung**
**W-5090 Leverkusen 1 Bayerwerk(DE)**

(54) Enamel compositions.

(57) A fluorine-free frit composition containing a high content of boron oxide and a relatively low amount of titanium oxide is provided. In a preferred embodiment, the composition contains a small amount of cobalt oxide. The composition is suitable for the preparation of enamel and are useful in both the dry and wet methods of application of frit. In particular, the frit is suitable for use in the electrostatic method of frit application on steel substrate. The composition of the invention is particularly suitable in "two coat-one fire" applications. The enamel produced from the frit of the invention is characterized in its virtual freedom from pitting, relatively high acid resistance and exceptional color stability.

EP 0 446 477 A1

Field of the Invention

The present invention relates to enamel compositions and more particularly to compositions which contain no fluorine and are high in their boron content.

SUMMARY OF THE INVENTION

Fluorine-free frit compositions having a high content of boron oxide and a relatively low amount of titanium oxide are provided. A small amount of cobalt oxide is included in a preferred embodiment. These compositions are suitable for the preparation of enamel and are useful in both the dry and wet methods of application of frits. In particular, the frits are suitable for use in the electrostatic method of frit application on steel substrate. The compositions of the invention are particularly suitable in "two coat-one fire" applications. The enamel produced from the frit of the invention is characterized in its virtual freedom from pitting, relatively high acid resistance and exceptional color stability.

BACKGROUND OF THE INVENTION

Fluorine has long been recognized and used as a fluxing component in the manufacture of enamel frits. In addition, traditional raw materials for the preparation of frits oftentimes contain fluorine. Alkali and alkaline earth cations are routinely introduced as fluorides. Recently, however, it has been recognized that fluorine emissions have an adverse effect on the ecology and regulations relative to its disposal have been promulgated and enforced. Development of fluorine-free compositions have therefore been an objective of enamel and of frit producers and the present invention represents an advance in this technology.

Enamel compositions containing titanium oxide and boron are known. For instance, in U.S. Patent 4,469,798 there is disclosed an enamel frit which contains 15 to 20% $B_2O_3$ and 10 to 17% $TiO_2$. While the composition contains no lead and is thus described as involving no ecological problems, it is noted to require 2 to 10% of fluorine. Fluorine is said to function in agitating the frit and in keeping its acidity and is regarded there as an essential component of the composition.

The art is also recognized as including U.S. Patent 3,216,847 which disclosed a frit composition having high contents of boron oxide and titanium oxide. The disclosure is silent in regard to the presence of fluorine and no cobalt oxide is noted as a necessary component.

It is an objective of the present invention to provide a fluorine free frit suitable for the preparation of a color stable, acid resistance enamel.

It is a further objective of the invention to provide an ecologically compatible frit composition having a desirable set of properties.

DETAILED DESCRIPTION OF THE INVENTION

The frit of the present invention is characterized in that (i) it flows to form a smooth and uniform coating at a sufficiently low temperature, (ii) the coefficient of thermal expansion of the resulting enamel is sufficiently low so as to be compatible with most ferrous substrates, (iii) the resulting enamel is acid resistant, and (iv) upon the firing process, it partially devitrifies and becomes opaque.

In terms of its content, expressed as weight percent on the basis of its oxides, the frit of the present invention conforms to

| Oxide | Wt % |
|---|---|
| $B_2O_3$ | 17 - 22 |
| $SiO_2$ | 40 - 45 |
| $TiO_2$ | 15 - 18 |
| $K_2O$ | 3 - 9 |
| $Na_2O$ | 5 - 10 |
| $Al_2O_3$ | 1 - 4 |
| $Li_2O$ | 0.25 - 1.0 |

In a preferred embodiment, the frit also contains

|       |            |
|-------|------------|
| CoO   | 0.02 - 0.1 |

optionally, the composition may further contain, the amounts noted as percent by weight,

|           |         |
|-----------|---------|
| $MgO$     | 0 - 1.0 |
| $ZnO$     | 0 - 1.0 |
| $P_2O_5$  | 0 - 3.0 |
| $Nb_2O_5$ | 0 - 0.1 |
| $NiO$     | 0 - 0.5 |
| $Cr_2O_3$ | 0 - 0.1 |
| $MnO_2$   | 0 - 1.0 |
| $Fe_2O_3$ | 0 - 1.0 |

The frit is characterized in that it is fluorine free and in that it has a relatively high contents of boron oxide and a relatively low content of titanium oxide. A small amount of cobalt oxide is included in a preferred embodiment. In addition, the frit is characterized in the absence of barium oxide therefrom.

While the frit of the invention is suitable for preparing enamels by using either a dry or a wet process, it was surprisingly found that the composition of the invention is particularly suitable for use by the dry, preferably the electrostatic method of application of frits. The resulting enamel was surprisingly and unexpectedly found to be uniform, color stable and resistant to chemical attack by acids. This is particularly surprising in view of the art's recognition that the dry method, and more particularly the electrostatic method is generally less forgiving, to wit, has a narrower margin for error, than do other methods of frit application.

The electrostatic method for applying frits to a metallic substrate is well known in the art. U.S. Patent 3,928,668, the disclosure of which is incorporated herein by reference, is noted to include a description of the method. In accordance with the method, a frit, optionally having first been coated with a suitable agent to impart to it a high resistivity, is electrostatically deposited by spraying it uniformly over a substrate and fired to form an enamel. It has long been recognized that the method, although offering several processing advantages and resulting in an excellent enamel coating, is less forgiving than are the known wet method of application. This sensitivity to small variations in the process may sometime be expressed in poor quality of the resulting enamel. It was therefor surprising and unexpected to find that the composition of the invention is very suitable for use in the process as process variations do not cause poor enamel.

Since high boron content in a frit composition is generally associated with poor acid resistance of the resulting enamels, the good acid resistance of the enamels of the present invention is surprising and unexpected. Specifically, while compositions containing about 20 percent boron oxide are rated, at best, B in accordance with the PEI - Porcelain Enamel Institute - acid resistance test the composition of the present invention, although containing a high level boron is consistently rated at least A on the same scale.

In accordance with the method of application of the composition of the present invention, the frit is applied on the substrate at a rate of approximately 30 grams per square foot. This rate of application results upon firing in an enamel having a thickness of about 5 mils.

PROCEDURE OUTLINE

The following is a description of the procedure which was used for preparing a composition within the scope of the invention. The raw materials were weighed (a typical raw material formula is shown in the table below), dry blended and charged into a glass melting furnace.

| Material | Weight |
|----------|--------|
| Silicon Dioxide | 1480.0 |
| Anhydrous Borax | 623.0 |
| Zinc Oxide | 12.5 |
| Potassium Nitrate | 135.0 |
| Boric Acid | 17.9 |
| Lithium Carbonate | 41.6 |
| Titanium Dioxide | 611.0 |
| Potassium Carbonate | 219.0 |
| Aluminum Oxide | 113.0 |
| Tripolyphosphate | 38.6 |
| Magnesium Oxide | 17.0 |
| Borax $(B_2O_3 \cdot 5H_2O)$ | 674.0 |
| Cobalt Hydrate/Silicon Dioxide | 18.6 |

Compositions within the scope of the invention were melted in a laboratory scale gas-air fired rotary smelter for times ranging about 12-18 minutes and at temperatures ranging from 2000 to 2500° F. The resulting molten glass was poured into water to produce frit. Additionally, frit compositions were melted in production scale continuous gas-oxygen fired smelters at a temperature of about 2200-2400° F. The production smelted material was made into frit form by passing it through water-cooled rollers.

The fritted material was comminuted using conventional means. Typically, 80-85 percent by weight of the thus comminuted frit has an average particle size of less than 45 micrometers (325 mesh).

The thus produced frit was used to enamel steel samples using conventional wet and dry application techniques.

Steel coupons (20 gauge extra low carbon cleaned steel) were used as the coated substrate. Frit in accordance with the invention was applied and the sample fired at a temperature in the range of 1350 to 1600° F. Holding times ranging from 3 to 10 minutes were used to simulate commercial firing conditions. Also, a high humidity condition was induced to simulate a worst case condition in terms of the expected resulting surface appearance.

Standard evaluation tests have been performed on the fired samples, including the Porcelain Enamel Institute (PEI) acid resistance test, color stability under varying firing conditions and the loaded beam stress test to determine the compressive stress present in the fired coating. In all cases, the surface quality of the enamels prepared from the frit of the invention exceeded that of currently available commercial products.

Modification and variations to the above described invention are possible and might occur to those skilled in the art in view of the present disclosure. It is however to be understood that such changes are within the scope of the invention as defined by the following claims.

## Claims

1. A color stable, acid resistant frit composition comprising the following oxides (percent by weight):

| | |
|---|---|
| $B_2O_3$ | 17 – 22 |
| $SiO_2$ | 40 – 45 |
| $TiO_2$ | 15 – 18 |
| $K_2O$ | 3 – 9 |
| $Na_2O$ | 5 – 10 |
| $Al_2O_3$ | 1 – 4 |
| $Li_2O$ | 0.25 – 1.0 |

characterized in the absence of fluorine and barium oxide therefrom.

2. The composition of Claim 1 further comprising up to about 1.0 percent by weight of at least one member selected from the group consisting of $MgO$, $ZnO$, $Fe_2O_3$ and $MnO_2$.

3. The composition of Claim 1 or Claim 2 further comprising up to about 0.1 percent by weight of at least one member selected from the group consisting of $Nb_2O_5$ and $Cr_2O_3$.

4. The composition of one Claims 1 to 3 further comprising up to about 0.5 percent by weight of $NiO$.

5. The composition of one Claims 1 to 4 further comprising up to about 3.0 percent by weight of $P_2O_5$.

6. The composition of Claim 1 further comprising 0,02-0,1 percent by weight of $CoO$.

7. In the dry method of applying frit to a substrate by electrostatic means, the improvement comprising using a frit according to one of Claims 1 to 6.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | EP-A-0 303 932   (BAYER AG)<br>* the whole document * | 1-5,7,6 | C 03 C 8/02<br>C 03 C 8/08 |
| X,Y | CHEMICAL ABSTRACTS, vol. 90, no. 22, 28 May 1979 Columbus, Ohio, USA page 314; ref. no. 173473T<br>& PL-A-89218 (WIECZOREK) 15-03-77<br>* abstract * | 1-5,7,6 | |
| X,Y | CHEMICAL ABSTRACTS, vol. 90, no. 22, 28 May 1979 Columbus, Ohio, USA page 314; ref. no. 173476W<br>& PL-A-87446 (NALEPA) 31-03-77<br>* abstract * | 1-5,7,6 | |
| X,Y | CHEMICAL ABSTRACTS, vol. 99, no. 6, 08 August 1983 Columbus, Ohio, USA page 248; ref. no. 42500N<br>& JP-A-58005854 (NIPPON FELT CO) 02-02-83<br>* abstract * | 1-5,7,6 | |
| D,X,D,Y | US-A-3 216 847   (ARMANT)<br>* claims * | 1-5,7,6 | |
| X,Y | GB-A-1 021 998   (THE EAGLE-PICHER CO.)<br>* claims * | 1-5,7,6 | TECHNICAL FIELDS SEARCHED (Int. Cl.5)<br><br>C 03 C |
| Y | FR-A-1 482 766   (FARBENFABRIKEN BAYER AG)<br>* page 2, left-hand column, paragraphs 3 - 4 * | 6 | |

The present search report has been drawn up for all claims

| Place of search | Date of completion of search | Examiner |
|---|---|---|
| The Hague | 13 June 91 | VAN BOMMEL L. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

.......................................................

& : member of the same patent family, corresponding document